(19) Europäisches Patentamt
European Patent Office
Office européen des brevets

(11) **EP 3 050 738 A1**

(12) **EUROPEAN PATENT APPLICATION**
published in accordance with Art. 153(4) EPC

(43) Date of publication:
**03.08.2016 Bulletin 2016/31**

(51) Int Cl.:
*B60L 5/00* (2006.01)  *B60L 11/18* (2006.01)
*B60M 7/00* (2006.01)  *H02J 7/00* (2006.01)

(21) Application number: **14843756.9**

(22) Date of filing: **10.06.2014**

(86) International application number:
**PCT/JP2014/065389**

(87) International publication number:
**WO 2015/037291 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.09.2013  JP 2013190742**

(71) Applicant: **Technova Inc.
Tokyo 100-0011 (JP)**

(72) Inventors:
• **YASUDA, Tomio**
  **Tokyo 100-0011 (JP)**
• **KISHI, Hiroyuki**
  **Tokyo 100-0011 (JP)**
• **FUJITA, Koichi**
  **Tokyo 100-0011 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **CONTACTLESS POWER SUPPLY DEVICE CAPABLE OF DETECTING METALLIC FOREIGN OBJECTS AND METALLIC FOREIGN OBJECT DETECTION METHOD THEREFOR**

(57) A non-contact power feeding device feeds electric power in a non-contact manner from a transmission coil 31 installed on ground to a reception coil 32 of a mobile object stopping at a feeding position. The device includes, on the ground, an inverter 20 that outputs a high-frequency alternate current to the transmission coil 31, and a metal detecting-determining unit 40 that detects a metallic foreign object on the transmission coil. The metal detecting-determining unit 40 monitors the phase of a voltage and a current output from the inverter 20 to the transmission coil 31 and detects a metallic foreign object having entered during power feeding, based on a variation in the phase. The non-contact power feeding device can detect metallic foreign objects according to only measured data from the ground while the mobile object stops at the feeding position and can be simplified in structure.

FIG.1

**Description**

TECHNICAL FIELD

An embodiment of the present invention relates to a non-contact power feeding device that can detect a metallic foreign object such as an aluminum can or a steel can on a ground-based transmission coil during non-contact power feeding from the transmission coil to a mobile object such as an electric vehicle including a reception coil, as well as relates to a method for detecting metallic foreign objects. The embodiment enables detection of metallic foreign objects with a simple configuration.

BACKGROUND ART

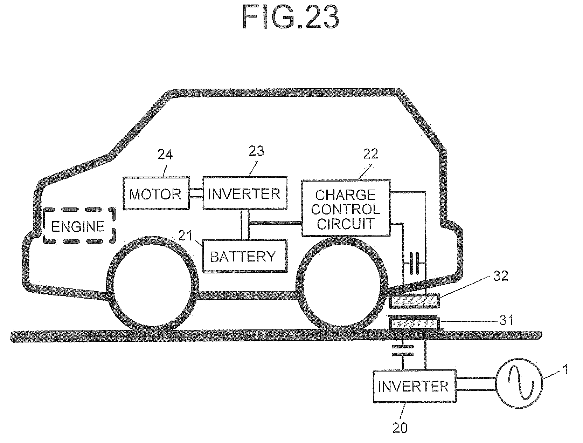

A non-contact power feeding method as illustrated in FIG. 23 is a known method for charging a secondary battery installed in an electric vehicle or a plug-in hybrid vehicle. In the non-contact power feeding method, a vehicle is parked in such a manner as to place a secondary coil (reception coil) 32 installed in the vehicle over a primary coil (transmission coil) 31 installed on the ground and then electric power is supplied in a non-contact manner from the transmission coil 31 to the reception coil 32 by electromagnetic induction.

A high-frequency alternate current, which is supplied to the transmission coil 31, is generated by an inverter 20 from the alternate current of a commercial power supply 1. The high-frequency alternate current is received by the reception coil 32 and converted into a direct current by a charge control circuit 22, and stored in a battery 21. Then, the direct current output from the battery 21 is converted into an alternate current by an inverter 23 for driving a motor 24.

If a metallic foreign object such as an aluminum can or a steel can enters in-between the transmission coil 31 and the reception coil 32 during the non-contact power feeding, eddy current flows in the metallic foreign object and negates the alternate-current magnetic field. By the eddy current, the metallic foreign object having a resistance generates Joule heat and becomes hot.

A resin case covering the transmission coil may be deformed by the heat from the metallic foreign object.

In order to avoid such a situation from occurring, Non-patent Literature 1 as mentioned below has proposed the following methods for detecting a metallic foreign object between a transmission coil and a reception coil in a non-contact power feeing device for an electric vehicle.

(1) Prior to a full feed, the vehicle parked at a feeding position is fed with a small amount of electric power sufficient to detect a metallic foreign object and measure the voltage of the transmission coil and the voltage of the reception coil. Then, transmission efficiency is estimated from the voltage ratio of the two voltages. The estimated transmission efficiency is then compared with an actual measured transmission efficiency to detect presence or absence of a metallic foreign object.

(2) While there is no vehicle stopping at the feeding position, a constant voltage at an LC resonance frequency is applied to the transmission coil to measure a current value. The presence or absence of a metallic foreign object is detected from the current value.

(3) While a vehicle is fully fed with power at the feeding position, an input power P1 to the transmission coil and an output power P2 from the reception coil are sampled at constant intervals to find sampling values of a loss (P1-P2) in feeding. When a difference between a current sampling value and a previous sampling value exceeds a threshold value, entry of a metallic foreign object during the full feeding is determined.

The methods (1) and (3) detect the presence or absence of a metallic foreign object from measured data from the ground on which the transmission coil is installed and measured data from the vehicle including the reception coil. The method (2) detects the presence or absence of a metallic foreign object from measured data only from the ground.

Moreover, Patent Literature 1 as mentioned below discloses a means for removing a detected metallic foreign object from the transmission coil.

CITATION LIST

Patent Literature

Patent Literature 1: Japan Laid-open Patent Publication No. 2013-59239

Non-patent Literature

Non-patent Literature 1: 2012 Institute of Electrical Engineers Industry Applications Conference of collection, No.4-10, pp.IV115-IV120 (August 23, 2012) "Foreign matter detection method in the gap of the non-contact power feeding device for electric vehicles"

DISCLOSURE OF INVENTION

PROBLEM TO BE SOLVED BY THE INVENTION

However, in order to detect a metallic foreign object, the detecting methods (1) and (3) based on the measured data from the ground and from the vehicle require a mechanism for sending the measured data from the vehicle to the ground. This complicates the system and increases costs in view of practical application perspective.

Meanwhile, the method (2) of detecting a metallic foreign object from only the measured data from the ground with no vehicle at the feeding position has the following issues.

With no reception coil around, the impedance of the transmission coil becomes smaller. Hence, an applied voltage to the transmission coil needs to be lowered so as to avoid breakdown by a high current. For this reason, it becomes necessary to connect a step-down transformer between a high-frequency power source and the transmission coil or to use a high-frequency power source having a large voltage control range capable of stably outputting a voltage of several volts.

The method requiring the connection of a step-down transformer further requires a main circuit control to connect the step-down transformer to the transmission coil during detection of a metallic foreign object and disconnect the step-down transformer during feeding. This results in complicating the system.

Besides, a high-frequency power source having a large voltage control range for stably outputting a voltage of several volts is very expensive, therefore, incurs cost increases.

Moreover, this method also requires a means for notifying the ground-based system of the fact that a vehicle is approaching the place in which the transmission coil is installed. This complicates the system.

Furthermore, while no vehicle is located over the transmission coil, a person can approach the transmission coil and enter leakage magnetic flux.

The present invention has been made in view of the issues mentioned above, and it is an object of the present invention to provide a non-contact power feeding device that, while a vehicle is parked at the feeding position, can detect a metallic foreign object in-between the transmission coil and the reception coil with no need for receiving measured data from the vehicle, and to provide a method for detecting metallic foreign objects.

MEANS FOR SOLVING PROBLEM

According to one embodiment of the present invention, a non-contact power feeding device feeds electric power to a reception coil of a mobile object from a transmission coil installed on ground in a non-contact manner when the mobile object stops at a feeding position. The device comprises, on the ground: an inverter that outputs a high-frequency alternate current to the transmission coil; and a metal detecting-determining unit that detects a metallic foreign object on the transmission coil. The metal detecting-determining unit monitors a phase of voltage and current of the electric power output from the inverter to the transmission coil to detect a metallic foreign object on the transmission coil based on a variation in the phase.

This device detects variations in Q (a coil performance index) of the transmission coil attributed to the presence or absence of a metallic foreign object as phase variations in the voltage-current of the inverter outputs.

Further, the non-contact power feeding device according to one embodiment of the present invention further comprises temperature-dependent resistors made of ceramic and disposed at a plurality of positions on the transmission coil. At start of power feeding, the metal detecting-determining unit detects presence or absence of a metallic foreign object on the transmission coil based on temperatures measured by the temperature-dependent resistors.

It is determined from the measured temperature that no metallic foreign object is present on the transmission coil, and a reference phase is set for detecting a voltage-current phase difference in the inverter outputs.

Further, in the non-contact power feeding device according to one embodiment of the present invention, each of the temperature-dependent resistors is connected to a wiring extending in a position not easily affected by magnetic flux.

The temperature-dependent resistors made of ceramic remain almost unaffected by the magnetic field. However, the wirings may produce heat because of the magnetic field. Hence, it is desirable that the wirings are laid in a pattern not to cross the magnetic flux. Further, if the wiring pattern needs to cross the magnetic flux, it is desirable that the wiring pattern is laid to cross the position having a low magnetic flux density.

Further, in the non-contact power feeding device according to one embodiment of the present invention, based on information from a security camera, the metal detecting-determining unit confirms absence of a metallic foreign object on the transmission coil prior to start of power feeding.

Further, in the non-contact power feeding device according to one embodiment of the present invention, a coil case accommodating the transmission coil includes a top face having an inclined face declining toward a periphery, and a size of the coil case is set to be greater than that of the transmission coil so as to prevent a metallic foreign object located at the periphery from exceeding a safe temperature which does not cause a burn injury, during power feeding.

On the coil case the steel can or the aluminum can may roll over the inclined face of the top surface of the coil case and come to a stop at the periphery. Hence, by setting the coil case larger in size than the transmission coil and setting the magnetic flux density at the periphery of the coil case to such a small value that the temperature of a metallic foreign object does not exceed a safe temperature (of about 60 °C) which causes no burn injury, it is made possible to prevent accidents caused by the heated metallic foreign objects.

Further, according to one embodiment of the present invention, a method is for detecting a metallic foreign object on a transmission coil installed on ground during non-contact power feeding from the transmission coil to a reception coil of a mobile object stopping at a feeding position. The method comprises: a resistance detecting step of supplying, at start of power feeding from the transmission coil to the reception coil, a voltage lower than a rated voltage to the transmission coil, measuring temperatures on the transmission coil with temperature-dependent resistors made of ceramic and disposed at a plurality of positions on the transmission coil, and detecting presence or absence of a metallic foreign object on the transmission coil based on measured temperatures; and a phase detecting step of supplying a rated voltage to the transmission coil after confirming absence of a metallic foreign object in the resistance detecting step, setting a phase of a voltage and a current of the transmission coil as a reference phase, and detecting a metallic foreign object having entered during power feeding, based on a variation in difference between the reference phase and a phase of a voltage and a current of the transmission coil measured after the setting.

By this detection method, a metallic foreign object can be detected from only measured data from the ground. Thus, the detection method does not require data reception from the mobile object that stops at the feeding position.

EFFECT OF THE INVENTION

The non-contact power feeding device and the method for detecting a metallic foreign object according to an embodiment of the present invention can detect metallic foreign objects from only the measured data from the ground side when a mobile object stops at the feeding position. A simplified system can be realized at a lower cost.

BRIEF DESCRIPTION OF DRAWINGS

FIG. 1 is a block diagram illustrating a non-contact power feeding device according to an embodiment;
FIG. 2 is a circuit configuration diagram of the non-contact power feeding device illustrated in FIG. 1;
FIG. 3 is a diagram illustrating an equivalent circuit of the circuit illustrated in FIG. 2;
FIG. 4 is a diagram illustrating an equivalent circuit when a metallic foreign object is present;
FIG. 5 is a diagram illustrating a result of measuring the voltage-current phase of inverter output when a steel can is placed;
FIG. 6 is a diagram illustrating a result of measuring the voltage-current phase of inverter output when an aluminum can is placed;
FIG. 7 is a diagram illustrating phase variations from a reference phase when a steel can or an aluminum can is placed;
FIG. 8 is a diagram illustrating the relationship between the coil case and positions at which a steel can or an aluminum can is placed;
FIG. 9 is a diagram illustrating the arrangement of temperature-dependent resistors on a transmission coil;
FIG. 10 is a diagram illustrating the magnetic flux distribution of the transmission coil;
FIG. 11 is a diagram illustrating the resistance temperature characteristics of the temperature-dependent resistors;
FIG. 12 is a diagram illustrating changes in the resistance due to the presence of a metallic foreign object;
FIG. 13 is a diagram illustrating changes in the resistance due to the presence of a metallic foreign object;
FIG. 14 is a flowchart for a sequence of metallic foreign object detection according to the embodiment;
FIG. 15 is a block diagram of a non-contact power feeding device that utilizes information from a security camera;
FIG. 16 is a flowchart for a sequence of metallic foreign object detection by the device illustrated in FIG. 15;
FIG. 17 is a block diagram of a non-contact power feeding device that utilizes information from a security camera installed in a vehicle;
FIG. 18 is a diagram illustrating the relationship between a distance from an end of a transmission coil cover to a metallic foreign object and heating temperature;
FIG. 19 is a planar view of a transmission coil case with a top face having an inclined face;
FIG. 20 is a planar view of a transmission coil case with a top face having an inclined face;
FIG. 21 is a side view of a transmission coil case with a top face having an inclined face;

FIG. 22 is a side view of a transmission coil case with a top face having an inclined face; and

FIG. 23 is a block diagram of a conventional non-contact power feeding device.

BEST MODE(S) FOR CARRYING OUT THE INVENTION

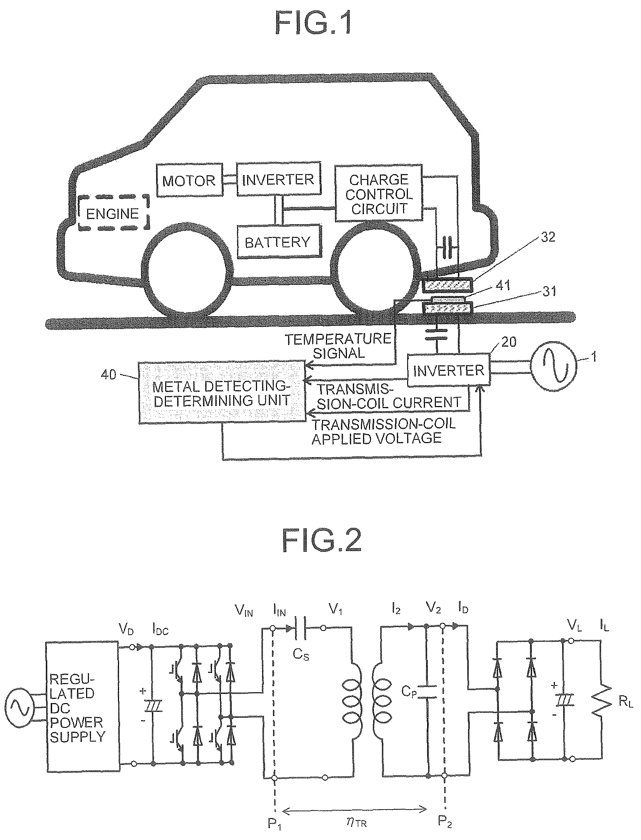

FIG. 1 illustrates a non-contact power feeding device according to an embodiment. This device includes, on the ground, a metal detecting-determining unit 40 for detecting a metallic foreign object on the transmission coil 31, and temperature-dependent resistors 41 for detecting the temperatures of the transmission coil 31. The rest of the configuration is identical to that of the device illustrated in FIG. 23.

The metal detecting-determining unit 40 obtains temperature information detected by the temperature-dependent resistors 41 and phase information on a current and an applied voltage of the transmission coil output from the inverter 20 to the transmission coil 31. Then, the metal detecting-determining unit 40 determines whether or not a metallic foreign object is present in the gap between the transmission coil 31 and the reception coil 32, according to the obtained information.

Entry of a metallic foreign object in the gap between the transmission coil 31 and the reception coil 32 causes a variation in the phase difference between the current and applied voltage of the transmission coil.

This can be explained as follows.

FIG. 2 illustrates a circuit configuration of a non-contact power feeding device of a primary-series, secondary-parallel capacitor type in which a capacitor Cs is connected in series with the transmission coil and a resonance capacitor Cp is connected in parallel with the reception coil.

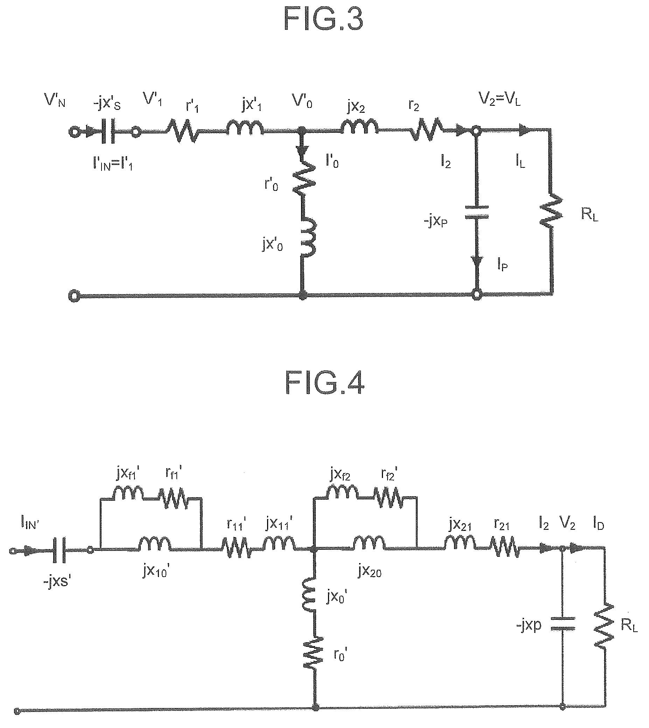

FIG. 3 illustrates a detailed equivalent circuit in which a power feeding transformer (a transmission coil and a reception coil) illustrated in FIG. 2 is represented as a T-shaped equivalent circuit additionally including the capacitors Cs and Cp and a resistance load RL. Note that various amounts on the primary side are denoted by added dash.

Presence of a metallic foreign object in-between the transmission coil and the reception coil causes changes in the detailed equivalent circuit in FIG. 3, as illustrated in FIG. 4. In FIG. 4, the codes $x_{11}$ and $x_{21}$ represent the leakage reactance of the transmission coil and the leakage reactance of the reception coil, respectively, the codes $x_{10}$ and $x_{20}$ represent the mutual reactance between a foreign object circuit and the transmission coil and between the foreign object circuit and the reception coil, respectively, the codes $x_{f1}$ and $x_{f2}$ represent the leakage flux of a primary foreign object circuit and the leakage flux of a secondary foreign object circuit, respectively, and the codes $r_{f1}$ and $r_{f2}$ represent the resistance of the primary foreign object circuit and the resistance of the secondary foreign object circuit, respectively.

Without any metallic foreign object, the leakage reactance $x_1$ of the transmission coil illustrated in FIG. 3 is expressed by the following Equation (1). With a metallic foreign object, the leakage reactance $x_1$ of the transmission coil is expressed by the following Equation (2).

$$x_1 = x_{10} + x_{11} \qquad (1)$$

$$x_1 = \frac{x_{f1}^2 + r_{f1}^2 + x_{10}x_{f1}}{\left(x_{f1}^2 + r_{f1}^2 + x_{10}x_{f1}\right) + x_{10}^2 + x_{10}x_{f1}} \cdot x_{10} + x_{11} \qquad (2)$$

Moreover, without any metallic foreign object, a wire wound resistance $r_1$ of the transmission coil illustrated in FIG. 3 is expressed by the following Equation (3), and with a metallic foreign object, it is expressed by the following Equation (4) present.

$$r_1 = r_{11} \qquad (3)$$

$$r_1 = r_{11} + \frac{x_{10}^2 r_{f1}}{\left(x_{10} + x_{f1}\right)^2 + r_{f1}^2} \qquad (4)$$

Thus, the presence of a metallic foreign object decreases the leakage reactance $x_1$ of the transmission coil and increases the wire wound resistance $r_1$ of the transmission coil.

Accordingly, by a metallic foreign object, Q($=\omega \cdot L/r$) representing the performance of the transmission coil is decreased.

A change in the performance Q appears in the form of a variation in the phase difference between the current and applied voltage of the transmission coil. Thus, the metal detecting-determining unit 40 detects a change in the performance Q as a variation in the phase difference between the current and applied voltage of the transmission coil.

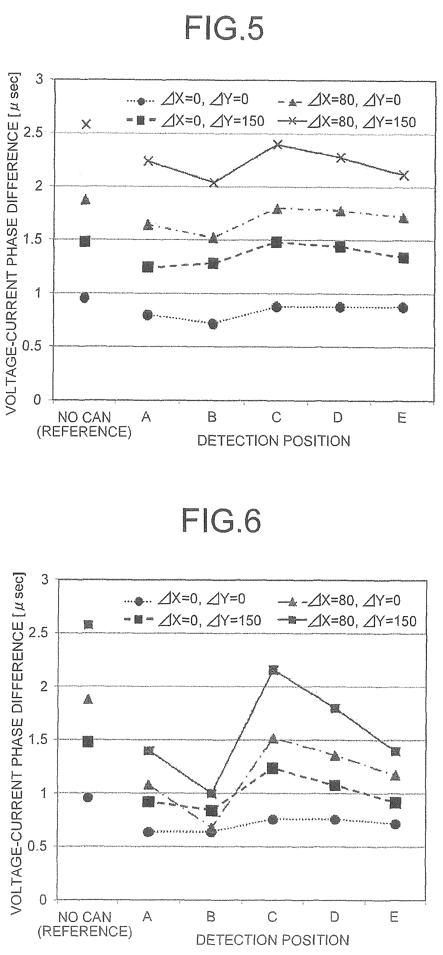

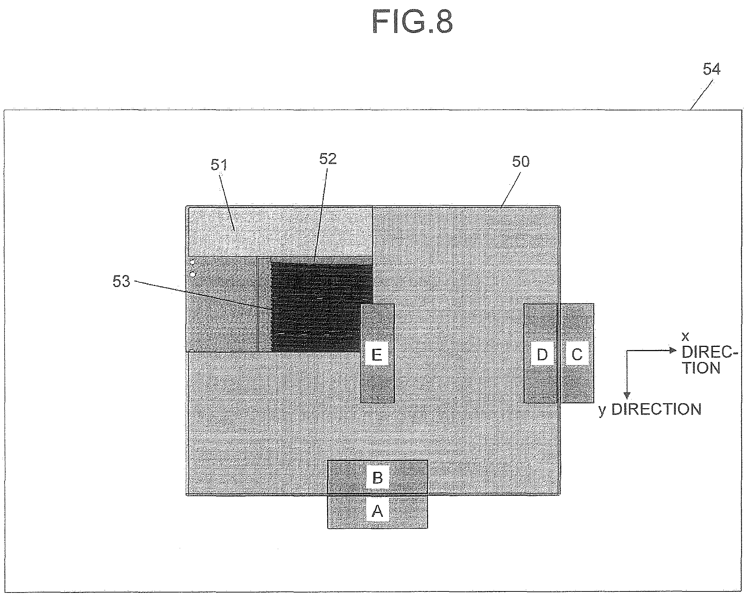

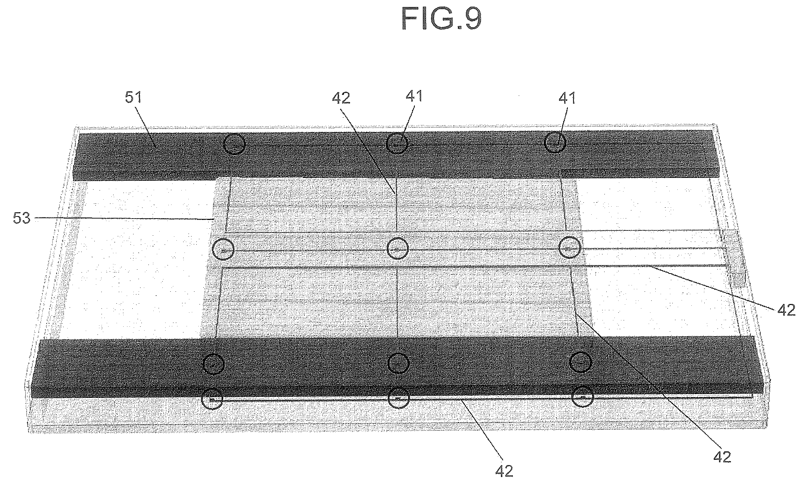

FIGS. 5 and 6 illustrate experimental results of measurement of the variations in the phase difference. FIG. 8 illustrates a transmission coil used in this experiment. With reference to FIG. 8, a coil case 50 is partially removed so as to expose some part of the transmission coil housed in the coil case 50. Herein, the transmission coil is formed by winding a wire 53 around a central portion 52 of an H-shaped ferrite core 51 (see FIG. 9). An aluminum board 54 which blocks the leakage magnetic flux is fixed on the back side of the coil case 50.

In the experiment, the feeding power is set to 3 kW, the power supply frequency is set to 50 kHz, and the gap length between the transmission coil and the reception coil is set to 100 mm. The phase difference is then measured while an empty aluminum or steel can is placed at positions A, B, C, D, or E illustrated in FIG. 8.

Meanwhile, as far as the actual non-contact power feeding device is concerned, it is difficult to stop a vehicle in such a manner that the reception coil directly opposes the transmission coil. For this reason, the device is designed to maintain the power feeding even if the transmission coil and the reception coil are horizontally displaced as long as the displacement falls within an allowable range. Hence, in this experiment, the characteristics of the transmission coil are measured under the condition that the transmission coil and the reception coil are displaced.

The displacement includes four patterns, that is, no horizontal displacement of the reception coil relative to the transmission coil (i.e., standard position) ($\Delta x = \Delta y = 0$), displacement of the reception coil by 80 mm relative to the transmission coil in the x direction($\Delta x = 80$), displacement of the reception coil relative to the transmission coil by 150 mm in the y direction ($\Delta y = 150$), and displacement of the reception coil relative to the transmission coil by 80 mm in the x direction and by 150 mm in the y direction ($\Delta x = 80$, $\Delta y = 150$).

Note that in this experiment, the phase difference between the current and applied voltage of the transmission coil is measured in the unit of microseconds. A phase difference of 2 $\mu$sec is equivalent to an angle of 36°.

FIG. 5 illustrates the experimental results in the case that a steel can is placed while FIG. 6 illustrates the experimental results in the case that an aluminum can is placed. The left sides of FIGS. 5 and 6 illustrate the voltage-current phase (reference phase) with no can placed.

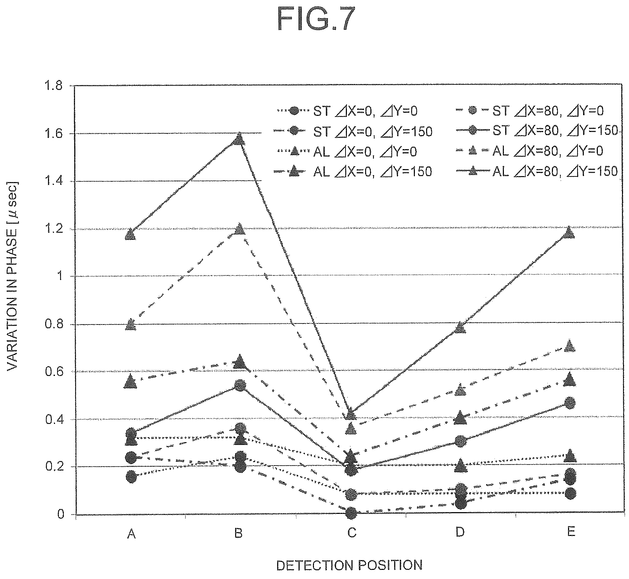

FIG. 7 illustrates the phase variations when a metallic foreign object enters, from the voltage-current phase (reference phase) when no metallic foreign object is present. In FIG. 7, a steel can is denoted by the code ST, and an aluminum can is denoted by the code AL.

It can be seen from FIGS. 5 and 6 that, regardless of how the transmission coil and the reception coil are displaced, the voltage-current phase in the presence (at any position) of a can is lower than the voltage-current phase (reference phase) in the absence of a can.

Hence, the reference phase is set in accordance with the displacement between the transmission coil and the reception coil. Thereby, it is possible to recognize the presence or absence of a metallic foreign object by comparing the reference phase and the measured voltage-current phase.

However, it can be also understood from FIG. 7 that it is hard to set the reference phase (metal determination threshold value) common to all the displacements between the transmission coil and the reception coil and recognize the presence or absence of all kinds of metallic foreign objects.

For example, with the metal determination threshold value set to 0.1 $\mu$sec, entry or no entry of an aluminum can is detectible. However, it is difficult to detect a steel can at the empty can position C, D, or E on the basis of the threshold value.

Meanwhile, regarding the method for comparing measured voltage-current phases and the reference phase (voltage-current phase in the absence of a metallic foreign object) which is prepared in advance according to the displacements between the transmission coil and the reception coil, it requires preparation of the reference phases for the entire area of displacements. This method bears a large load accordingly. Moreover, it requires a means for finding the amount of displacement between the transmission coil and the reception coil, thereby unavoidably complicating the system.

In view of this, in the present embodiment, the reference phase (voltage-current phase in the absence of a metallic foreign object) according to the displacements between the transmission coil and the reception coil can be easily found by the method of detecting a metallic foreign object from temperature information detected by the temperature-dependent resistors 41 together with the method above.

The temperature-dependent resistors 41 are minute elements made of ceramic and disposed in the center of each transmission coil represented by circles (nine on the front side, three on each lateral side, 15 circles in total) in FIG. 9. Herein, the temperature-dependent resistors 41 are disposed at all the empty can positions C, D, and E at which detection of a metallic foreign object based on the voltage-current phase difference is difficult.

The minute temperature-dependent resistors 41 made of ceramic remain almost unaffected by the magnetic field between the transmission coil and the reception coil. However, wirings 42 that extend from the temperature-dependent resistors 41 may produce heat due to the magnetic field. Hence, the wiring pattern is set not to be likely affected by the magnetic field.

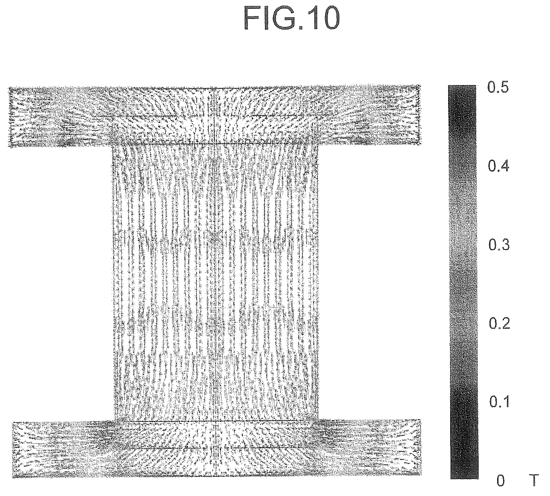

FIG. 10 illustrates the magnetic flux distribution of the transmission coil formed by winding a wire around the center of an H-shaped ferrite core. The wirings 42 of the temperature-dependent resistors 41 are set to extend along the magnetic flux in such a manner as not to cross the magnetic flux as much as possible. In a case where crossing the magnetic flux is unavoidable, the wirings 42 are set to cross the magnetic flux at the center of the H shape having a low magnetic flux density.

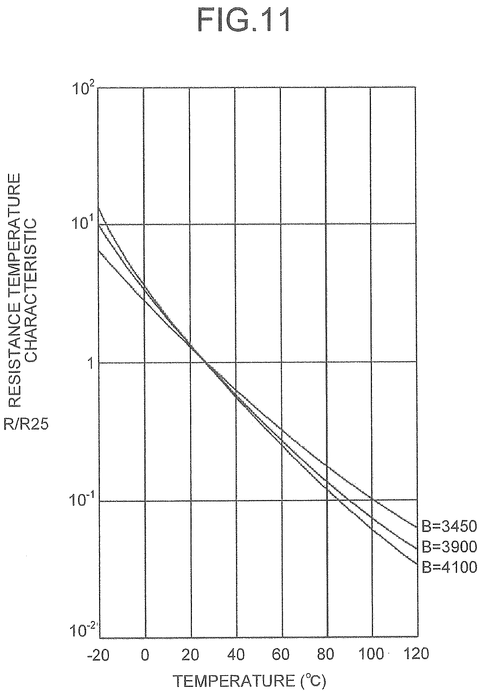

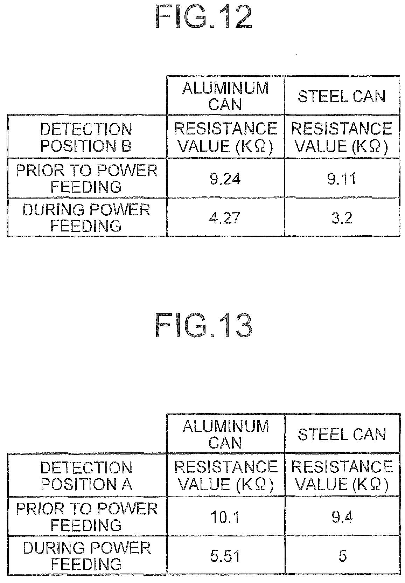

FIG. 11 illustrates one example of the resistance temperature characteristics of the temperature-dependent resistors 41. FIGS. 12 and 13 illustrate changes in the resistance values of the temperature-dependent resistors 41 placed at the empty can positions B and A when an aluminum can or a steel can is present at the empty can positions B and A. It is possible to detect the presence or absence of a metallic foreign object from the changes in the resistance values of the temperature-dependent resistors 41.

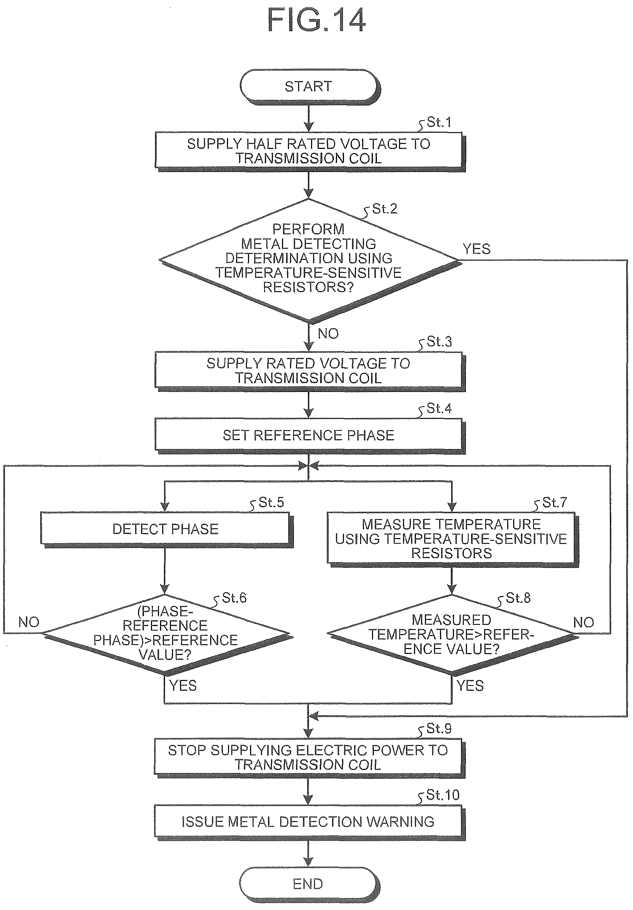

FIG. 14 illustrates a sequence of operations by the metal detecting-determining unit 40 for determining the presence of a metallic foreign object.

At the feeding position a vehicle stops to be fed with a half rated voltage at the reception coil 32 from the inverter 20 through the transmission coil 31 (Step 1).

Then, a determination is made on whether or not a metallic foreign object is on the transmission coil according to the resistance values of the temperature-dependent resistors 41 (Step 2). If a metallic foreign object is detected (Yes at Step 2), the power supply to the transmission coil is stopped (Step 9).

On the other hand, if no metallic foreign object is detected (No at Step 2), the reception coil 32 of the vehicle is fed with the rated voltage from the inverter 20 through the transmission coil 31 (Step 3). The voltage-current phase of the applied voltage and current of the transmission coil is set as the reference phase (Step 4).

Then, the voltage-current phase of the electric power applied to the transmission coil 31 from the inverter 20 during feeding is monitored (Step 5). A determination is made on whether the difference between the voltage-current phase and the reference phase does not exceed the reference value (Step 6). If the difference does not exceed the reference value (No at Step 6), then the rated voltage is continuously supplied to the transmission coil 31. However, if the difference exceeds the reference value (Yes at Step 6), the power supply to the transmission coil 31 is stopped (Step 9).

At the same time, the resistance values of the temperature-dependent resistors 41 are continuously monitored (Step 7). A determination is made on whether the detected temperature does not exceed the reference value according to the resistance values (Step 8). If the detected temperature does not exceed the reference value (No at Step 8), the rated voltage is continuously supplied to the transmission coil 31. However, if the detected temperature exceeds the reference value (Yes at Step 8), the power supply to the transmission coil 31 is stopped (Step 9).

Upon the stop of the power supply to the transmission coil 31 (Step 9), a metal detection warning is issued (Step 10). Alternatively, the metallic foreign object can be removed by the means disclosed in Patent Literature 1.

Thus, the non-contact power feeding device can detect a metallic foreign object from only the measured data from the ground side while a vehicle stops at the feeding position.

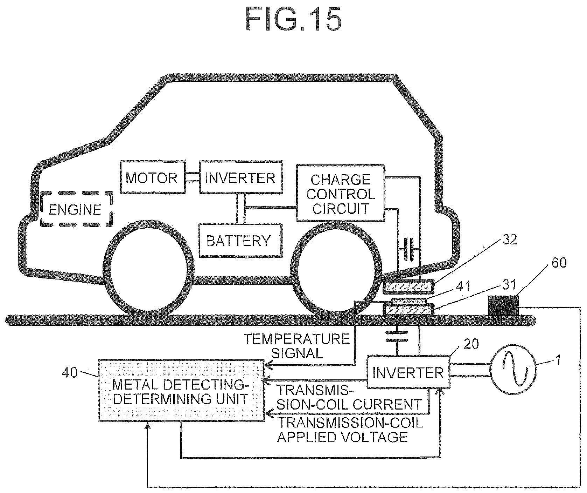

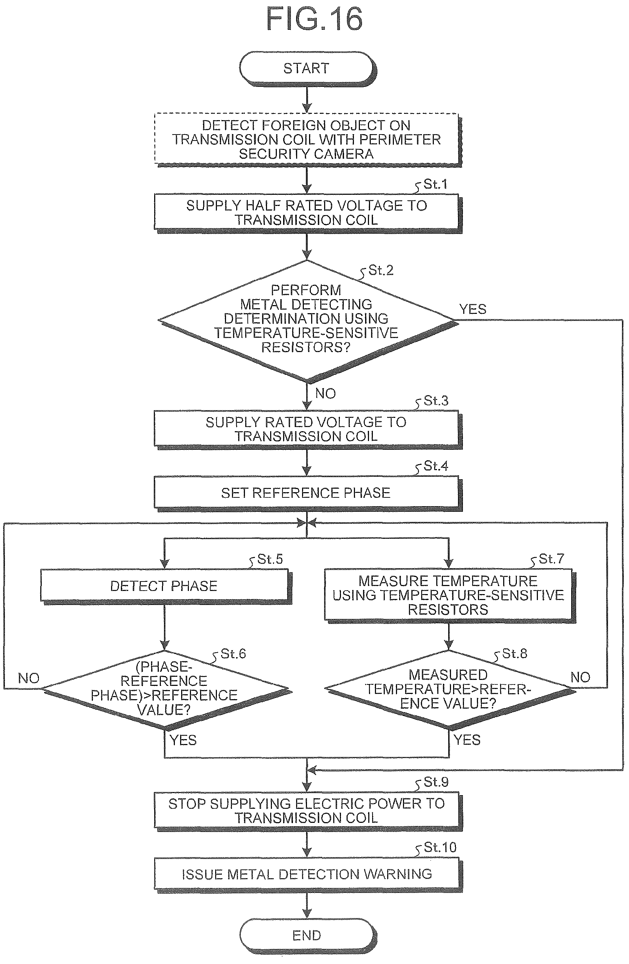

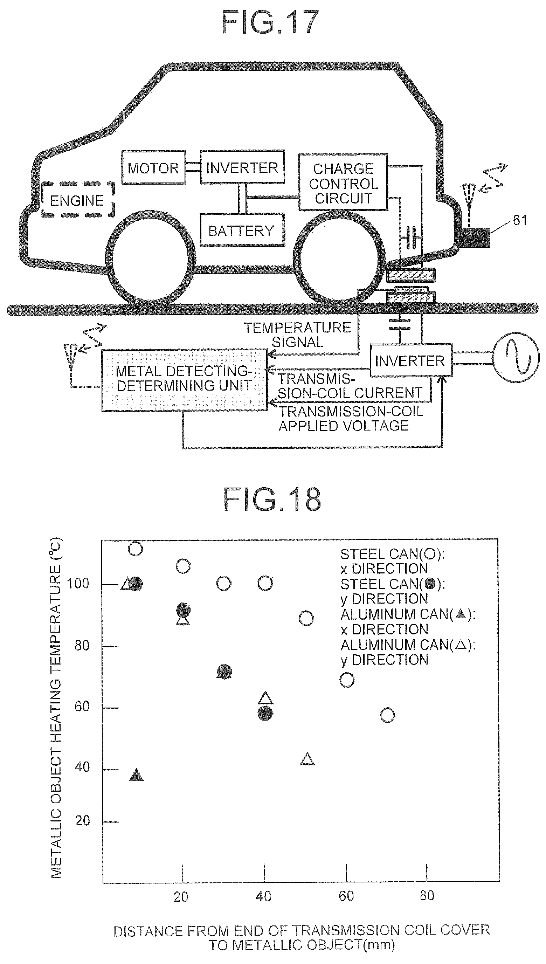

Further, a security camera can also be used to provide images in order to recognize presence or absence of a metallic foreign object on the transmission coil at the start of feeding. FIG. 15 illustrates a non-contact power feeding device including the metal detecting-determining unit 40 configured to determine a metallic foreign object on the transmission coil at the start of feeding, with additionally taking image information from a security camera 60 into account. In this case, as illustrated in FIG. 16, a foreign object detection for the transmission coil with the security camera is performed prior to Step 1. Further, as illustrated in FIG. 17, a popular in-vehicle camera 61 can be used for the security camera to transmit captured images wirelessly to the metal detecting-determining unit 40 when the vehicle advances to the feeding position.

Next, a devised coil case accommodating the transmission coil will be described.

FIG. 18 illustrates the exothermal behaviors of metallic objects when moved from the position A in FIG. 8 by increments of 10 mm in the y direction and from the position C by increments of 10 mm in the x direction until the exothermic temperatures of the objects fall to 60 °C or less. Herein, the temperature of 60 °C is considered as a safe temperature which will not cause a burn on a person's hand touching and pulling away the object at this temperature.

It can be apparent from FIG. 18 that neither a steel can nor an aluminum can reaches the temperature of 60 °C or higher at a position remote from the transmission coil case 50 in FIG. 8 by 70 mm in the x direction and by 40 mm in the y direction.

Hence, a transmission coil case is designed to be larger by 70 mm in the x direction and by 40 mm in the y direction than the transmission coil case 50 illustrated in FIG. 8. Thereby, an empty metallic can (steel can and aluminum can) placed at any edge of the coil case does not produce heat.

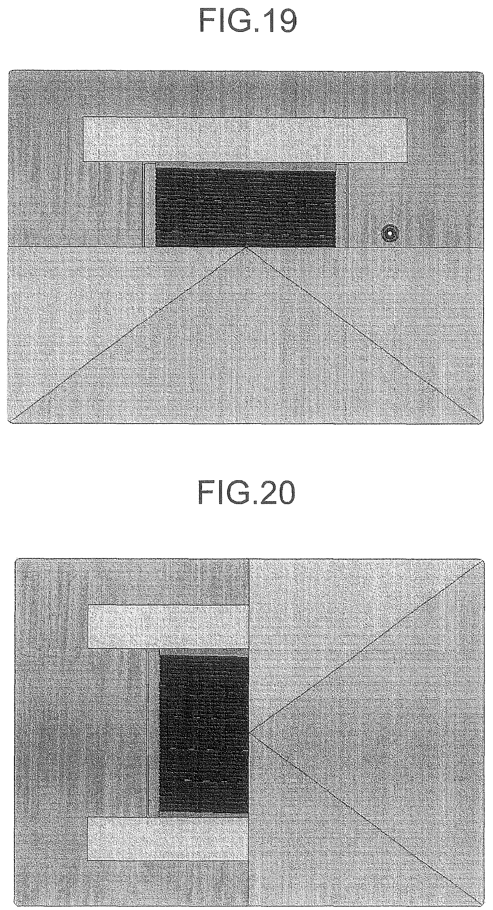

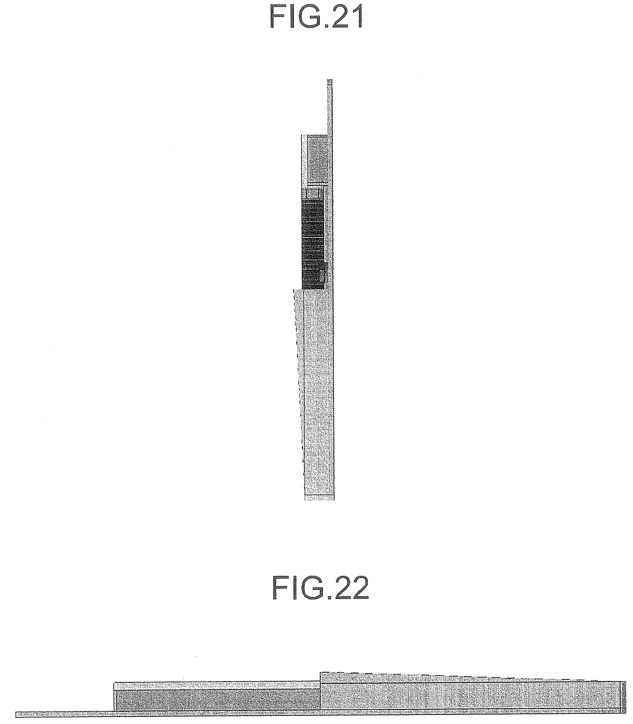

Moreover, the top surface of the transmission coil case includes an inclined face declining toward the periphery, as illustrated in the planar views in FIGS. 19 and 20 and the side views in FIGS. 21 and 22. Because of this, a steel can or an aluminum can rolls over the coil case along the inclined face toward the periphery. Besides, even if the can comes to a stop at the periphery of the coil case, it does not become too hot to reach or exceed 60 °C.

This makes it possible to prevent accidents from occurring due to a heated empty can.

INDUSTRIAL APPLICABILITY

The non-contact power feeding device with a simple configuration according to an embodiment of the present invention can detect a metallic foreign object on a transmission coil, and can be widely applied to a non-contact power feeding for a mobile object equipped with a secondary battery, such as an electric vehicle, an electric forklift truck, and an automated electric guided vehicle.

EXPLANATIONS OF LETTERS OR NUMERALS

| 20 | inverter |
| 21 | battery |
| 22 | charge control circuit |
| 23 | inverter |
| 24 | motor |
| 31 | transmission coil |
| 32 | reception coil |
| 40 | metal detecting-determining unit |
| 41 | temperature-dependent resistor |
| 42 | wiring |
| 50 | coil case |
| 51 | ferrite core |
| 52 | central portion |
| 53 | wire |
| 54 | aluminum board |
| 60 | security camera |
| 61 | in-vehicle camera |

**Claims**

1.  A non-contact power feeding device that feeds electric power to a reception coil of a mobile object from a transmission coil installed on ground in a non-contact manner when the mobile object stops at a feeding position, the device comprising, on the ground:

    an inverter that outputs a high-frequency alternate current to the transmission coil; and
    a metal detecting-determining unit that detects a metallic foreign object on the transmission coil, wherein
    the metal detecting-determining unit monitors a phase of voltage and current of the electric power output from the inverter to the transmission coil to detect a metallic foreign object on the transmission coil based on a variation in the phase.

2.  The non-contact power feeding device according to claim 1, further comprising
    temperature-dependent resistors made of ceramic and disposed at a plurality of positions on the transmission coil, wherein
    the metal detecting-determining unit detects presence or absence of a metallic foreign object on the transmission coil based on temperatures measured by the temperature-dependent resistors, at start of power feeding.

3.  The non-contact power feeding device according to claim 2, wherein
    each of the temperature-dependent resistors is connected to a wiring extending in a position not easily affected by magnetic flux.

4.  The non-contact power feeding device according to claim 1 or 2, wherein
    the metal detecting-determining unit confirms absence of a metallic foreign object on the transmission coil prior to start of power feeding, based on information from a security camera.

**5.** The non-contact power feeding device according to any one of claims 1 to 4, wherein
a coil case accommodating the transmission coil includes a top face having an inclined face declining toward a periphery; and
a size of the coil case is set to be greater than a size of the transmission coil so as to prevent a metallic foreign object located at the periphery from exceeding a safe temperature which does not cause a burn injury, during power feeding.

**6.** A method for detecting a metallic foreign object on a transmission coil installed on ground during non-contact power feeding from the transmission coil to a reception coil of a mobile object stopping at a feeding position, the method comprising:

a resistance detecting step of

supplying, at start of power feeding from the transmission coil to the reception coil, a voltage lower than a rated voltage to the transmission coil,
measuring temperatures on the transmission coil with temperature-dependent resistors made of ceramic and disposed at a plurality of positions on the transmission coil, and
detecting presence or absence of a metallic foreign object on the transmission coil based on measured temperatures; and

a phase detecting step of

supplying a rated voltage to the transmission coil after confirming absence of a metallic foreign object in the resistance detecting step,
setting a phase of a voltage and a current of the transmission coil as a reference phase, and
detecting a metallic foreign object having entered during power feeding, based on a variation in difference between the reference phase and a phase of a voltage and a current of the transmission coil measured after the setting.

# FIG.1

MOTOR

INVERTER

ENGINE

CHARGE
CONTROL
CIRCUIT

BATTERY

32

41

31

20

1

TEMPERATURE
SIGNAL

INVERTER

40

METAL DETECTING-
DETERMINING UNIT

TRANSMIS-
SION-COIL CURRENT

TRANSMISSION-COIL
APPLIED VOLTAGE

# FIG.2

$V_{IN}$   $I_{IN}$   $V_1$   $I_2$   $V_2$   $I_D$   $V_L$   $I_L$

$V_D$   $I_{DC}$

REGU-
LATED
DC
POWER
SUPPLY

$C_S$

$C_P$

$R_L$

$P_1$   $\eta_{TR}$   $P_2$

# FIG.3

# FIG.4

# FIG.5

# FIG.6

# FIG.7

# FIG.8

EP 3 050 738 A1

FIG.9

FIG.10

# FIG.11

EP 3 050 738 A1

FIG.12

| DETECTION POSITION B | ALUMINUM CAN RESISTANCE VALUE (KΩ) | STEEL CAN RESISTANCE VALUE (KΩ) |
|---|---|---|
| PRIOR TO POWER FEEDING | 9.24 | 9.11 |
| DURING POWER FEEDING | 4.27 | 3.2 |

FIG.13

| DETECTION POSITION A | ALUMINUM CAN RESISTANCE VALUE (KΩ) | STEEL CAN RESISTANCE VALUE (KΩ) |
|---|---|---|
| PRIOR TO POWER FEEDING | 10.1 | 9.4 |
| DURING POWER FEEDING | 5.51 | 5 |

18

# FIG.14

START

SUPPLY HALF RATED VOLTAGE TO TRANSMISSION COIL  ⌐St.1

PERFORM METAL DETECTING DETERMINATION USING TEMPERATURE-SENSITIVE RESISTORS?  ⌐St.2 — YES

NO

SUPPLY RATED VOLTAGE TO TRANSMISSION COIL  ⌐St.3

SET REFERENCE PHASE  ⌐St.4

DETECT PHASE  ⌐St.5

MEASURE TEMPERATURE USING TEMPERATURE-SENSITIVE RESISTORS  ⌐St.7

NO — (PHASE-REFERENCE PHASE)>REFERENCE VALUE?  ⌐St.6

MEASURED TEMPERATURE>REFERENCE VALUE?  ⌐St.8 — NO

YES

YES

STOP SUPPLYING ELECTRIC POWER TO TRANSMISSION COIL  ⌐St.9

ISSUE METAL DETECTION WARNING  ⌐St.10

END

FIG.15

MOTOR — INVERTER

ENGINE

CHARGE
CONTROL
CIRCUIT

BATTERY

32

60

41

31

TEMPERATURE
SIGNAL

20

1

40

METAL DETECTING-
DETERMINING UNIT

INVERTER

TRANSMIS-
SION-COIL CURRENT

TRANSMISSION-COIL
APPLIED VOLTAGE

# FIG.16

```
                        ┌──────────┐
                        │  START   │
                        └──────────┘
                             │
          ┌ ─ ─ ─ ─ ─ ─ ─ ─ ─│─ ─ ─ ─ ─ ─ ─ ─ ─ ┐
              DETECT FOREIGN OBJECT ON
          │ TRANSMISSION COIL WITH PERIMETER  │
                    SECURITY CAMERA
          └ ─ ─ ─ ─ ─ ─ ─ ─ ─│─ ─ ─ ─ ─ ─ ─ ─ ─ ┘
                             │            St.1
          ┌──────────────────────────────────┐
          │  SUPPLY HALF RATED VOLTAGE TO     │
          │         TRANSMISSION COIL         │
          └──────────────────────────────────┘
                             │            St.2
                        ╱────────────╲
                       ╱   PERFORM     ╲
                      ╱  METAL DETECTING ╲       YES
                     ╱ DETERMINATION USING╲──────────────┐
                     ╲ TEMPERATURE-SENSITIVE╱             │
                      ╲    RESISTORS?     ╱               │
                        ╲────────────╱                    │
                             │ NO                         │
                             │            St.3            │
          ┌──────────────────────────────────┐           │
          │     SUPPLY RATED VOLTAGE TO       │           │
          │         TRANSMISSION COIL         │           │
          └──────────────────────────────────┘           │
                             │            St.4            │
          ┌──────────────────────────────────┐           │
          │        SET REFERENCE PHASE        │           │
          └──────────────────────────────────┘           │
```

# FIG.17

# FIG.18

DISTANCE FROM END OF TRANSMISSION COIL COVER
TO METALLIC OBJECT(mm)

# FIG.19

# FIG.20

FIG.21

FIG.22

# FIG.23

## INTERNATIONAL SEARCH REPORT

| International application No. |
|---|
| PCT/JP2014/065389 |

A.  CLASSIFICATION OF SUBJECT MATTER
*H02J17/00*(2006.01)i, *B60L5/00*(2006.01)i, *B60L11/18*(2006.01)i, *B60M7/00*
(2006.01)i, *H02J7/00*(2006.01)i

According to International Patent Classification (IPC) or to both national classification and IPC

B.  FIELDS SEARCHED

Minimum documentation searched (classification system followed by classification symbols)
H02J17/00, B60L5/00, B60L11/18, B60M7/00, H02J7/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2012-249400 A  (Nissan Motor Co., Ltd.), 13 December 2012 (13.12.2012), entire text; all drawings (Family: none) | 1-6 |
| Y | JP 2009-112137 A  (Meleagros Corp.), 21 May 2009 (21.05.2009), paragraphs [0427] to [0457]; fig. 84 to 88 (Family: none) | 1-6 |
| Y | JP 2001-258182 A  (Sharp Corp.), 21 September 2001 (21.09.2001), paragraphs [0018], [0023], [0047] to [0047]; fig. 10 (Family: none) | 2,3,6 |

[×]  Further documents are listed in the continuation of Box C.        [ ]  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 July, 2014 (17.07.14) | 29 July, 2014 (29.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

26

**INTERNATIONAL SEARCH REPORT**

International application No.

PCT/JP2014/065389

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2013-135491 A  (Equos Research Co., Ltd.),<br>08 July 2013 (08.07.2013),<br>entire text; all drawings<br>(Family: none) | 5 |
| A | WO 2013/036947 A2  (WITRICITY CORP.),<br>14 March 2013 (14.03.2013),<br>entire text; all drawings<br>& US 2013/0069441 A1 | 1-6 |
| A | JP 2010-183705 A  (Seiko Epson Corp.),<br>19 August 2010 (19.08.2010),<br>paragraphs [0101] to [0104]<br>(Family: none) | 1-6 |
| A | JP 2009-011129 A  (Seiko Epson Corp.),<br>15 January 2009 (15.01.2009),<br>entire text; all drawings<br>& US 2009/0001932 A1     & CN 101335470 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013059239 A

### Non-patent literature cited in the description

- Foreign matter detection method in the gap of the non-contact power feeding device for electric vehicles. *2012 Institute of Electrical Engineers Industry Applications Conference of collection,* 23 August 2012, IV115-IV120